# EUROPEAN PATENT SPECIFICATION

(11) **EP 2 018 409 B1**
(45) Date of publication and mention of the grant of the patent: **27.01.2010**
(21) Application number: 07743436.3
(22) Date of filing: 09.05.2007
(51) Int. Cl.: C08L 83/04, C09J 183/04, C09K 3/10, C08K 3/00, C08K 3/26, C08K 3/36

(54) **SILICONE RUBBER COMPOSITION**
SILIKONGUMMIZUSAMMENSETZUNG
COMPOSITION DE CAOUTCHOUC DE SILICONE

(30) Priority: 10.05.2006 JP 2006131998
(43) Date of publication of application: 28.01.2009
(73) Proprietor: Dow Corning Toray Co., Ltd., Tokyo 100-0005 (JP)
(72) Inventor: TAKUMAN, Osamu c/o Dow Corning Toray Co., Ltd, Chiba 2990108 (JP); TASAKI, Tomoko c/o Dow Corning Toray Co., Ltd., Chiba 2990108 (JP); TSUJI, Yuichi c/o Dow Corning Toray Co., Ltd., Chiba 2990108 (JP)
(74) Representative: Gillard, Richard Edward
(86) International application number: PCT/JP2007/060001
(87) International publication number: WO 2007/129777

(56) References cited:
- GB-A- 1 278 798
- JP-A- 2006 117 823
- US-A- 4 609 687
- US-A1- 2002 129 898
- US-A1- 2002 132 914
- US-A1- 2005 137 321

## Description

### Technical Field

The present invention relates to a hydrosilylation-curable silicone rubber composition that contains quartz powder and calcium carbonate powder

### Background Art

Known in the art is a silicone rubber composition (Japanese Unexamined Patent Application Publication (hereinafter referred to as "Kokai") H10-60281) that contains a calcium carbonate powder and comprises a hydrosilylation-curable silicone rubber composition consisting of a diorganopolysiloxane having at least two alkenyl groups in one molecule, an organopolysiloxane having at least two silicon-bonded hydrogen atoms in one molecule, a metal platinum catalyst, and a calcium carbonate powder surface-treated with a partially hydrolyzed product of condensation of a tetraalkoxysilane. Also known is a silicone rubber composition (Kokai 2002-038016 (equivalent to US2002-37963A1), Kokai 2002-285130 (equivalent to US2002-129898A1), Kokai 2005-082661) comprising a diorganopolysiloxane having at least two alkenyl groups in one molecule, a calcium carbonate powder, an organopolysiloxane having at least two silicon-bonded hydrogen atoms in one molecule, and a metallic platinum catalyst. These compositions are known to have adhesive properties with respect to silicone rubber.

However, the aforementioned silicone rubber compositions show a tendency to decrease the cohesive failure factor when they are adhesively attached to silicone rubber. Therefore, attempts have been made to replace a portion of the calcium carbonate powder with quartz powder, but when the aforementioned silicone rubber composition is compounded with quartz powder, unwanted liquid dripping occurs when the composition is dispensed or applied onto surfaces from a dispenser or the like. In subsequent applications, either the adhesion force was reduced because of the formation of air bubbles, or the adhesive material attached to undesired areas and spoiled the appearance of the product.

### Disclosure of Invention

It is an object of the present invention to provide a hydrosilylation-curable silicone rubber composition that possesses excellent adhesion to silicone rubber and that contains quartz powder and calcium carbonate powder with improved flow properties.

The silicone rubber composition of the invention comprises the following:
100 parts by mass of a diorganopolysiloxane (A) having on average at least two alkenyl groups in one molecule;
5 to 100 parts by mass of a quartz powder (B) with an average particle size in the range of 0.01 to 3.0 µm;
an organopolysiloxane (C) having on average at least two silicon-bonded hydrogen atoms in one molecule {a mole ratio of silicon-bonded hydrogen atoms contained in this component to alkenyl groups of component (A) is in the range of 0.5 to 5};
5 to 100 parts by mass of a calcium carbonate powder (D); and
a hydrosilylation catalyst (E) (in an amount sufficient for accelerating the curing of the silicone composition of the present invention).

### Best Mode for Carrying Out the Invention

The silicone rubber composition of the invention will now be described in more detail.
The diorganopolysiloxane (A) that contains on average at least two alkenyl groups in one molecule is the main component of the silicone rubber composition of the invention. The alkenyl groups are represented by vinyl, allyl, butenyl, pentenyl, hexenyl, and heptenyl group, of which vinyl groups are preferable. Silicon-bonded organic groups other than alkenyl groups contained in component (A) are exemplified by methyl, ethyl, propyl, butyl, pentyl, hexyl, or similar alkyl groups; phenyl, tolyl, xylyl, or similar aryl groups; 3-chloropropyl, 3,3,3-trifluoropropyl or similar halogenated alkyl groups, of which methyl and phenyl groups are preferable. Component (A) has essentially a linear molecular structure, but within the limits that do not interfere with the object of the invention, this component may have a partially branched structure. There are no special restrictions with regard to the viscosity of component (A) at 25°C, but it is recommended that the viscosity at 25°C be in the range of 100 to 1,000,000,000 mPa·s, preferably in the range of 100 to 500,000 mPa·s.

Aforementioned component (A) is exemplified by the following compounds: a diorganopolysiloxane capped at both molecular terminals with dimethylvinylsiloxy groups; a copolymer of a methylvinylsiloxane and dimethylsiloxane capped at both molecular terminals with dimethylvinylsiloxy groups; a copolymer of a methylvinylsiloxane and dimethylsiloxane capped at both molecular terminals with trimethylsiloxy groups; the aforementioned compounds wherein a part or all of methyl groups contained in the diorganopolysiloxanes are substituted with ethyl, propyl, or similar alkyl groups, phenyl, tolyl, or similar aryl groups, 3,3,3-trifluoropropyl or similar halogenated alkyl groups; the aforementioned compounds wherein a part of or all vinyl groups contained in the diorganopolysiloxanes are substituted with allyl, propenyl, or similar alkenyl groups; or mixtures of two or more diorganopolysiloxanes.

It is recommended that the quartz powder (B), which is used in the silicone rubber composition of the invention, have an average particle size in the range of 0.01 to 3.0 µm, preferably in the range of 0.1 to 3.0 µm, and most preferably in the range of 0.1 to 2.0 µm. If the average size of particles of component (B) exceeds 3 µm, it will be difficult to sufficiently restrict liquid dripping during dispensing or application onto surfaces. There are no special restrictions with regard to the shape of particles of component (B), and they may be spherical, plate-like, needle-like, or irregular in shape. The average size of the particles can be defined in terms of a weight-average value (or a median diameter) determined by means of a grain-size-distribution instrument that is provided with an analyzing means, such as a laser optical diffraction device.

It is recommended that component (B) be contained in the aforementioned silicone rubber composition in an amount of 5 to 100 parts by mass, preferably 5 to 60 parts by mass per 100 parts by mass of component (A). If the content of component (B) is below the recommended lower limit, then it will be difficult to sufficiently improve the cohesive failure factor of the silicone rubber composition of the invention when it is cured with adhesion to silicone rubber. On the other hand, if the content of component (B) exceeds the recommended upper limit, it will be difficult to provide the composition with uniformity.

The organopolysiloxane (C) that contains at least two silicon-bonded hydrogen atoms in one molecule is a curing agent that reacts with component (A) and cross-links the silicone rubber composition in the presence of the below-described hydrosilylation catalyst. There are no special restrictions with regard to the molecular structure of component (C), and this component may have a linear molecular structure, a branched molecular structure, a cyclic molecular structure, or a three-dimensional net-like molecular structure. Silicon-bonded organic groups contained in component (C) are exemplified by methyl, ethyl, propyl, pentyl, hexyl, or similar alkyl groups; phenyl, tolyl, xylyl, or similar aryl groups; benzyl, phenethyl, or similar aralkyl groups; 3-chloropropyl, 3,3,3-trifluoropropyl, or similar halogenated alkyl groups of which most preferable are methyl groups. There are no special restrictions with regard to the viscosity of component (C) at 25°C, but it is recommended that the viscosity at 25°C be in the range of 1 to 1,000,000,000 mPa·s.

Component (C) is exemplified by the following compounds: a methylhydrogenpolysiloxane capped at both molecular terminals with trimethylsiloxy groups, a copolymer of methylhydrogensiloxane and dimethylsiloxane capped at both molecular terminals with trimethylsiloxy groups, a methylhydrogenpolysiloxane capped at both molecular terminals with dimethylhydrogensiloxy groups, a copolymer of hydrogensiloxane and dimethylsiloxane capped at both molecular terminals with dimethylhydrogensiloxy groups, a cyclic methylhydrogenpolysiloxane composed of siloxane units represented by the following formulae: (CH₃)₂ HSiO_{1/2} and SiO_{4/2}; the aforementioned compounds, wherein a part of or all methyl groups contained in the organopolysiloxanes are substituted with ethyl, propyl, or similar alkyl groups, phenyl, tolyl, or similar aryl groups, 3,3,3-trifluoropropyl, or similar halogenated alkyl groups; or mixtures of two or more of the aforementioned organopolysiloxanes. From the viewpoint of improved adhesion to silicone rubber and physical properties that may be acquired by the obtained silicone rubber, it is most preferable to use the following compounds: an organohydrogenpolysiloxane, a copolymer of diorganosiloxane and organohydrogensiloxane, or a diorganopolysiloxane capped at both molecular terminals with diorganohydrogensiloxy groups, but especially preferable for use are the following: the copolymer of organohydrogensiloxane and diorganosiloxane capped at both molecular terminals with triorganosiloxy groups, the diorganopolysiloxane capped at both molecular terminals with diorganohydrogensiloxy groups, or mixtures of two or more of the last-mentioned compounds.

It is recommended to use component (C) in the silicone rubber composition of the invention in such an amount that the mole ratio of silicon-bonded hydrogen atoms contained in this component to alkenyl groups contained in component (A) is in the range of 0.5 to 5, preferably in the range of 0.6 to 3, and most preferably in the range of 0.6 to 2. If component (C) is used in an amount below the recommended lower limit, it will be difficult to sufficiently cure the silicone rubber composition. If, on the other hand, the content of component (C) exceeds the recommended upper limit, this will impair adhesive properties and physical characteristics of the obtained silicone rubber. When component (C) contained in the silicone rubber composition of the invention is a combination of a copolymer of an organohydrogensiloxane and diorganosiloxane capped at both molecular terminals with triorganosiloxy groups and a diorganopolysiloxane capped at both molecular terminals with diorganohydrogensiloxy groups, then the ratio of the mole number of silicon-bonded hydrogen atoms contained in the copolymer of organohydrogensiloxane and diorganosiloxane capped at both molecular terminals with triorganosiloxy groups to a mole number of silicon-bonded hydrogen atoms contained in the diorganopolysiloxane capped at both molecular terminals with diorganohydrogensiloxy groups is in the range of (1:1) to (10:1).

Calcium carbonate powder (D) is a component that is used for improving adhesion of the silicone rubber composition of the invention to silicone rubber. There are no special restrictions with regard to the BET-specific area of component (D), but it is recommended to have this characteristic in the range of 5 to 50 m²/g, preferably 10 to 50 m²/g. From the viewpoint of improved adhesion of the composition to silicone rubber and for improved physical strength, it is recommended that the average particle size of component (D) be in the range of 0.01 to 2.0 µm, preferably in the range of 0.05 to 2.0 µm. The average particle size of component (D) can be calculated from the BET-specific area. The calcium carbonate powder of aforementioned component (D) is exemplified by heavy (or dry-process grounded) calcium carbonate powder, light (or precipitated) calcium carbonate powder, or the aforementioned calcium carbonate powders surface-treated with organic acids such as fatty acids or resin acids. Most preferable are light (or precipitated) calcium carbonate powders, especially light (or precipitated) calcium carbonate powders surface-treated with organic acids such as resin acids or fatty acids.

It is recommended to use component (D) in the silicone rubber composition of the invention in an amount of 5 to 100 parts by mass, preferably 5 to 60 parts by mass per 100 parts by mass of component (A). If component (D) is used in amount less than the lower recommended limit, this will impair adhesion of the silicone rubber composition of the invention to silicone rubber. On the other hand, if the content of component (D) exceeds the upper recommended limit, it will be difficult to obtain the silicone rubber composition with the necessary uniformity.

Hydrosilylation catalyst (E) is a component that is used for accelerating the curing of the silicone rubber composition of the invention. This component is exemplified by a platinum-type catalyst, a rhodium-type catalyst, an iridium-type catalyst, a palladium-type catalyst, and a ruthenium-type catalyst. The following are more specific examples of component (E): a fme platinum powder, platinum black, chloroplatinic acid, platinum tetrachloride, an alcohol-modified chloroplatinic acid, a complex of platinum and olefin, a complex of platinum and alkenylsiloxane, a complex of platinum and carbonyl, or the following resins that contain a platinum-type catalyst: methylmethacrylate resin, polycarbonate resin, polystyrene resin, silicone resin, or a similar thermoplastic resin; rhodium-type catalysts represented by the following formulae: [Rh(O₂CCH₃)₂]₂, Rh(O₂CCH₃)₃, Rh₂(C₈H₁₅O₂)₄, Rh(C₅H₇O₂)₃, Rh(C₅H₇O₂) (CO)₂, Rh(CO) [Ph₃P](C₅H₇O₂), RhX₃ [(R)₂S]₃, (R²3P)₂Rh(CO)X, (R²₃P)₂Rh(CO)H, Rh₂X₂Y₄, HₐRh_{b}(En)_{c}Cl_{d}, or Rh[O(CO)R]₃₋ₙ (OH)ₙ (where X designates a hydrogen atom, chlorine atom, bromine atom, or iodine atom; Y designates a methyl group, ethyl group, or a similar alkyl group, CO, C₈H₁₄ or 0.5 C₈H₁₂; R designates an alkyl group, cycloalkyl group, or an aryl group; R² designates an alkyl group, aryl group, alkyloxy group, or an aryloxy group; En designates an olefin; "a" is 0 or 1; "b" is 1 or 2; "c" is an integer from 1 to 4; "d" is 2, 3, or 4; and "n" is 0 or 1); an iridium-type catalyst represented by the following formulae: Ir (OOCCH₃)₃, Ir (C₅H₇O₂)_{3,} [Ir (Z) (En)₂]₂, or [Ir(Z) (Dien)]₂ (where Z designates a chlorine atom, a bromine atom, an iodine atom, or an alkoxy group; En designates an olefin; and Dien designates a cyclooctadien).

There are no special limitations with regard to the amount in which component (E) can be used in the silicone rubber composition of the invention provided that it accelerates curing. It may be recommended, however, to add component (E) in an amount of 0.5 to 100 parts by mass, preferably 1 to 60 parts by mass per 1,000,000 parts by mass of component (A).

The silicone rubber composition of the invention may also contain a silica powder (F), which is added to the composition for improving physical strength of a silica rubber obtained by curing the composition. Aforementioned component (F) is exemplified by a fumed silica, precipitated silica, baked silica, or by the aforementioned powders surface-treated with an organoalkoxysilane, an organohalosilane, organosilazane, or a similar organic silicon compounds; hexamethyltetrasiloxane, octamethylpentasiloxane, or a similar diorganopolysiloxane having low moleculer weight. Most preferable from the viewpoint of improved physical strength of the cured adhesive is a silica powder having a BET-specific area higher at least 50 m²/g.

Component (F) can be used in the silicone rubber composition of the invention in an arbitrary amount, but for improved physical strength of the obtained silicone rubber, it is recommended to add this component in an amount of 1 to 100 parts by mass, preferably 1 to 50 parts by mass of component (A).

The silicone rubber composition of the invention may also be combined with some arbitrary components such as fumed titanium oxide, carbon black, diatomaceous earth, iron oxide, aluminum oxide, alumina silicate, magnesium carbonate, zinc oxide, aluminum hydroxide, silver, nickel, or other inorganic fillers; or the aforementioned fillers surface-treated with organic silicon compounds or diorganopolysiloxane having low moleculer weight.

In order to improve adhesive properties of the silicone rubber composition of the invention, the composition may be compounded with an adhesion-imparting agent such as methyltrimethoxysilane, vinyltrimethoxysilane, allyltrimethoxysilane, 3-methacryloxypropyltrimethoxysilane, 3 -glycidoxypropyltrimethoxysilane, N-(2-aminoethyl)-3-aminopropyltrimethoxysilane, bis (trimethoxysilyl) propane, bis (trimethoxysilyl) hexane, or a similar silane coupling agent; tetraethyltitanate, terapropyltitanate, tetrabutyltitanate, tetra (2-ethylhexyl) titanate, titanium ethylacetonate, titanium acetylacetonate, or a similar titanium compound; ethylacetoacetate aluminum diisopropylate, aluminum tris (ethylacetoacetate), alkylacetoacetate aluminum diisopropylate, aluminum tris (acetylacetonate), aluminum monoacetylacetonate bis (ethylacetoacetate), or a similar aluminum compound; zirconium acetylacetonate, zirconium butoxyacetylacetonate, zirconium bisacetylacetonate, and zirconium ethylacetoacetonate, or a similar zirconium compound. There are no restrictions with regard to the amount in which the aforementioned adhesion-imparting agent can be added, but in general they can be added in an amount of 0.01 to 10 parts by mass per 100 parts by mass of component (A).

For improving storage stability, handlability, and workability, the composition of the invention can be compounded with the following compounds: 2-methyl-3-butyn-2-ol, 3,5-dimethyl-1-hexyn-3-ol, 2-phenyl-3-butyn-2-ol, or a similar acetylene-type compound; 3-methyl-3-penten-1-yne, 3,5-dimethyl-3-hexen-1-nyne, or a similar enyne compound; 1,3,5,7-tetramethyl-1,3,5,7-tetravinylcyclotetrasiloxane, 1,3,5,7-tetramethyl-1,3,5,7-tetrahexenyl cyclotetrasiloxane, methylvinylsiloxane capped at both molecular terminals with silanol groups, a copolymer of dimethylsiloxane and methylvinylsiloxane capped at both molecular terminals with silanol groups, or similar organosiloxane compounds having more than 5 wt.% of vinyl groups in one molecule; benzotriazole, or similar triazols, phosphines, mercaptanes, hydrazines, or similar curing inhibitors. These compounds can be added in amounts of 0.001 to 5 parts by mass per 100 parts by mass of component (A).

For improving long term storage stability of the silicone rubber composition of the invention, the composition may be compounded with a diorganopolysiloxane capped at both molecular terminals with hydroxyl groups having a viscosity at 25°C in the range of 5 to 200 mPa·s (G). Preferable component (G) is exemplified by the following compounds: a dimethylpolysiloxane capped at both molecular terminals with hydroxyl groups; a copolymer of a methylphenylsiloxane and dimethylsiloxane capped at both molecular terminals with hydroxyl groups; a copolymer of a methylvinylsiloxane and dimethylsiloxane capped at both molecular terminals with hydroxyl groups. Component (G) can be added in amounts of 0.1 to 10 parts by mass per 100 parts by mass of component (A).

There are no special restrictions with regard to the method for preparation of the silicone rubber composition of the invention, but, in general, the composition is prepared by mixing components (A) through (E), if necessary, with arbitrary components. However, if the composition contains component (F), then it is recommended to prepare a base mixture by mixing while heating component (A) and component (F) and then adding components (B) through (E) and (G) to the obtained base mixture. When it is necessary to add arbitrary components, these components can be introduced during preparation of the base mixture, or if they change properties when heated, these-components should be added to the base mixture with components (B) through (E). Furthermore, the aforementioned organic silicon compound or diorganopolysiloxane having low moleculer weight can be added during preparation of the base mixture, and the surface of component (F) can be treated *in situ.* The adhesive composition of the present invention can be prepared by using a conventional kneading machine such as a two-roll mill, a kneader-mixer, a Ross mixer, etc.

In order to improve storage stability, the silicone rubber composition of the invention can be prepared as a two-part silicone rubber composition that consists of composition (I), which contains component (A) and component (E) but which does not contain component (C), and a composition (II), which contains component (A) and component (C) but which does not contain component (E). Components (B) and (D) can be added to both of compositions (I) and (II) or to either compostion (I) or composition (II). If component (F) is present in the composition, it can be premixed either with composition (I), which is the base mixture premixed with component (A), or with composition (II). If component (G) is present in the composition, it is recommended to add composition (G) with component (D).

There are no restrictions with regard to the viscosity at 25°C of the silicone rubber composition of the invention, but it may be recommended that the silicone rubber composition may have viscosities in the range of 150 to 2,000 mPa·s, more preferably in the range of 200 to 1,000 mPa·s, and the most preferably in the range of 300 to 1,000 mPa·s. If the viscosity at 25°C of the silicone rubber composition of the invention may be within the aforementioned range, thickness and/or width of the silicone composition which is applied onto a surface of a substrate as an adhesive or a sealer can be easily controlled during manufacturing process.

### [Examples]

The silicone rubber composition of the invention will now be described in more detail with reference to application and comparative examples. In the subsequent examples, the values of viscosities correspond to measurements at 25°C. The values of silicone rubber characteristics were measured by the method described below.

### [Viscosity of Silicone Rubber Composition]

Viscosity at 25°C of the silicone rubber composition was measured with Type B viscometer (Type BS viscometer; No. 7 rotor, 10 rpm) in accordance with JIS K 7117.

### [Physical Characteristics of Silicone Rubber]

Silicone rubber was prepared by curing silicone rubber compositions. Curing was carried out by retaining the compositions for one day at 25°C. Hardness of the obtained silicone rubber was measured by a Type-A durometer in accordance with JIS K 6253. Dumbbell-type specimens were produced by retaining the silicone rubber composition for one day at 25°C and then modified Dumbbell No. 7 specimens having extended holding portions of the standard Dumbbell No. 7 specimens according to JIS K 6251 were punched out. The obtained specimens were subjected to tensile strength testing and elongation testing in accordance with JIS K 6251.

### [Adhesive Force and Cohesive Failure Factor of Silicone Rubber]

Adhesive capacity of the silicone rubber obtained from the silicone rubber composition as specified by JIS K 6854 was measured by the following method. The silicone rubber composition was spread over a 50-mm-wide Nylon base fabric coated with 30 g/m² of silicone rubber, and then the composition was covered with Nylon tape coated with the aforementioned silicone rubber so that the thickness of the composition layer was equal to 0.7 mm. And then specimens for measuring adhesive force were produced by curing the aforementioned composition by retaining it for one day at 25°C. The adhesion force of the composition to the silicone rubber was measured by testing the aforementioned specimen on a T-type peeling tester by stretching the Nylon tape coated with silicone rubber at a rate of 200 mm/min.
On completion of the adhesive force test, the peeled surface of the silicone rubber was observed, and then the coefficient of cohesive failure was determined as a percentage of the area where cohesive failure occurred over the entire peeled surface.

### [Evaluation of Liquid Dripping of Silicone Rubber Composition]

Fifty milliliters of the silicone rubber composition were loaded into a 50-ml-capacity cartridge. A static mixer (MA6.3-17-S, the product of Advantek DY Company, Ltd; length: 129 mm; inner diameter of outlet port: 1.5 mm) was connected to the tip of the cartridge, and then liquid stringing and liquid dripping of the silicone rubber composition from the outlet port of the static mixer was visually observed when the composition was extruded with use of a specific hand gun by the following procedure.
1) When about 10 ml of the silicone rubber composition had been extruded, the extrusion was stopped.
2) And then the outlet port of the static mixer was brought up about 5 cm above, immediately, and it was observed whether liquid stringing was present or not.
3) The outlet port of the static mixer was held for 20 seconds at the position and it was observed whether liquid dripping was present or not.
If both of liquid stringing and liquid dripping of the composition was present, such cases were designated by the symbol "X". If slight liquid stringing was present but liquid dripping was absent, such cases were designated by the symbol "O". If both of liquid stringing and liquid dripping of the composition was absent, such cases were designated by the symbol "⊚".

### [Application Example 1]

A uniform mixture was prepared from 100 parts by mass of a dimethylpolysiloxane capped at both molecular terminals with dimethylvinylsiloxy groups and having a viscosity of 40,000 mPa·s, 15 parts by mass of a fumed silica having a BET-surface area of 200 m²/g, 1.5 parts by mass of hexamethyldisilazane as a surface-coating agent for silica, and 1 part by mass of water. The components were stirred while heating for 2 hours at a temperature of 170°C under reduced pressure whereby a base mixture was prepared.

A mixture was prepared from the following components: 40.7 parts by mass of the obtained base mixture; 20 parts by mass of a precipitated calcium carbonate powder surface-treated with a fatty acid and having a BET-specific area of 18 m²/g (Hakuenka CCR, the product of Shiraishi Co., Ltd.; average particle size: 12 µm (the value recalculated with reference to the BET-specific area)); 20 parts by mass of quartz powder having an average particle size of 1.5 µm (Crystallite 5X, the product of Tatsumori Co); 70.3 parts by mass of a dimethylpolysiloxane capped at both molecular terminals with dimethylvinylsiloxy groups and having a viscosity of 40,000 mPa·s; 3.0 parts by mass of a dimethylpolysiloxane capped at both molecular terminals with hydroxyl groups and having a viscosity of 40 mPa·s; 0.93 parts by mass of a copolymer of methylhydrogensiloxane and dimethylsiloxane capped at both molecular terminals with trimethylsiloxy groups and having a viscosity of 13 mPa·s (the mole ratio of silicon-bonded hydrogen atoms contained in this component to vinyl groups of the dimethylpolysiloxane contained in the silicone rubber composition of the present invention was equal to 0.27); 1.81 parts by mass of a dimethylpolysiloxane capped at both molecular terminals with a dimethylhydrogensiloxane and having a viscosity of 9.5 mPa·s (the mole ratio of silicon-bonded hydrogen atoms contained in this component to vinyl groups of the dimethylpolysiloxane contained in the silicone rubber composition of the present invention was equal to 0.63); and 1,3-divinyltetramethyldisiloxane solution of a complex of platinum with 1,3-divinyltetramethyldisiloxane (used in such an amount that the content of metallic platinum of this catalyst per 1,000,000 of the dimethylpolysiloxane capped at both molecular terminals with dimethylvinylsiloxy groups and having a viscosity of 40,000 mPa·s becomes 45 parts by mass). The components were mixed, whereby a silicone rubber composition was obtained. Results of the liquid-drip test of the obtained silicone rubber composition are shown in Table 1. Silicone rubber obtained by curing the aforementioned silicone rubber composition was tested with regard to physical properties, adhesive capacity, and coefficient of cohesive failure. Results of the test are shown in Table 1.

### [Application Example 2]

A silicone rubber composition was prepared by the same method as in Application Example 1, except that Crystallite 5X was replaced with Crystallite VX-SR, the product of Tatsumori Co., having an average particle size of 2.5 µm. The results of the liquid-drip test of the obtained silicone rubber composition are shown in Table 1. Silicone rubber obtained by curing the aforementioned silicone rubber composition was tested with regard to physical properties, adhesive capacity, and coefficient of cohesive failure. The results are shown in Table 1.

### [Application Example 3]

A mixture was prepared from the following components: 15.0 parts by mass of the obtained base mixture in the application example 1; 45 parts by mass of a precipitated calcium carbonate powder surface-treated with a fatty acid and having a BET-specific area of 18 m²/g (Hakuenka CCR, the product of Shiraishi Co., Ltd.; average particle size: 12 µm (the value recalculated with reference to the BET-specific area)); 20 parts by mass of quartz powder having an average particle size of 1.5 µm (Crystallite 5X, the product of Tatsumori Co); 84.5 parts by mass of a dimethylpolysiloxane capped at both molecular terminals with dimethylvinylsiloxy groups and having a viscosity of 40,000 mPa·s; 3.0 parts by mass of a dimethylpolysiloxane capped at both molecular terminals with hydroxyl groups and having a viscosity of 40 mPa·s; 0.95 parts by mass of a copolymer of methylhydrogensiloxane and dimethylsiloxane capped at both molecular terminals with trimethylsiloxy groups and having a viscosity of 13 mPa·s (the mole ratio of silicon-bonded hydrogen atoms contained in this component to vinyl groups of the dimethylpolysiloxane contained in the silicone rubber composition of the present invention was equal to 0.40); 1.91 parts by mass of a dimethylpolysiloxane capped at both molecular terminals with a dimethylhydrogensiloxane and having a viscosity of 9.5 mPa·s (the mole ratio of silicon-bonded hydrogen atoms contained in this component to vinyl groups of the dimethylpolysiloxane contained in the silicone rubber composition of the present invention was equal to 0.60); and 1,3-divinyltetramethyldisiloxane solution of a complex of platinum with 1,3-divinyltetramethyldisiloxane (used in such an amount that the content of metallic platinum of this catalyst per 1,000,000 of the dimethylpolysiloxane capped at both molecular terminals with dimethylvinylsiloxy groups and having a viscosity of 40,000 mPa·s becomes 45 parts by mass). The components were mixed, whereby a silicone rubber composition was obtained. Results of the liquid-drip test of the obtained silicone rubber composition are shown in Table 1. Silicone rubber obtained by curing the aforementioned silicone rubber composition was tested with regard to physical properties, adhesive capacity, and coefficient of cohesive failure. Results of the test are shown in Table 1.

### [Comparative Example 1]

A silicone rubber composition was prepared by the same method as in Application Example 1, except that Crystallite 5X was replaced with Crystallite VX-S2, the product of Tatsumori Co., having an average particle size of 5 µm. The results of the liquid-drip test of the obtained silicone rubber composition are shown in Table 1. Silicone rubber obtained by curing the aforementioned silicone rubber composition was tested with regard to physical properties, adhesive capacity, and coefficient of cohesive failure. The results are shown in Table 1.

**[Table 1]**

| Test | Application Example 1 | Application Example 2 | Application Example 3 | Comparative Example 1 |
|---|---|---|---|---|
| Viscosity (mPa·s) | 200 | 180 | 450 | 130 |
| Hardness | 14 | 14 | 14 | 14 |
| Tensile Strength (MPa) | 5.0 | 4.2 | 3.5 | 3.5 |
| Elongation (%) | 1400 | 1400 | 1450 | 1300 |
| Adhesive Force (kgf/cm) | 55 | 55 | 55 | 45 |
| Coefficient of Cohesive Failure (%) | 100 | 100 | 100 | 100 |
| Evaluation of Liquid Dripping | ⊚ | O | ⊚ | X |

### Industrial Applicability

The silicone rubber composition of the invention demonstrates excellent adhesion to silicone rubber, and has improved flow properties that are characterized by restricted liquid dripping during extrusion and application. For example, the composition of the invention is suitable for use as an adhesive for a silicone rubber part or as a sealer in areas where pieces of silicone-rubber-coated fabric laminated onto each other must be connected by adhesion or sewing to form products such as airbags.

## Claims

1. A silicone rubber composition comprising:
100 parts by mass of a diorganopolysiloxane (A) having on average at least two alkenyl groups in one molecule;
5 to 100 parts by mass of a quartz powder (B) with an average particle size in the range of 0.01 to 3.0 µm;
an organopolysiloxane (C) having on average of at least two silicon-bonded hydrogen atoms in one molecule, the mole ratio of silicon-bonded hydrogen atoms contained in this component to alkenyl groups of component (A) is in the range of 0.5 to 5;
5 to 100 parts by mass of a calcium carbonate powder (D); and
a hydrosilylation catalyst (E) in an amount sufficient for accelerating the curing of the silicone rubber composition.

2. The silicone rubber composition according to Claim 1, wherein component (D) is a light (precipitated) calcium carbonate powder.

3. The silicone rubber composition according to Claim 1, wherein component (D) is a light (precipitated) calcium carbonate powder that is surface-treated with a fatty acid or a resin acid.

4. The silicone rubber composition according to Claim 1, further provided with a silica powder (F) used in an amount of 1 to 100 parts by mass per 100 parts by mass of component (A).

5. The silicone rubber composition of Claim 4, wherein components (A) and (F) are preliminarily mixed while heating.

6. The silicone rubber composition according to Claims 1 to 5, further provided with a diorganopolysiloxane capped at both molecular terminals with hydroxyl groups having a viscosity at 25°C in the range of 5 to 200 mPa·s (G) used in an amount of 0.1 to 10 parts by mass per 100 parts by mass of component (A).

7. The silicone rubber composition according to any of Claims 1 to 6, wherein said silicone rubber composition is an adhesive agent for silicone rubber.

8. The silicone rubber composition according to any of Claims 1 to 6, wherein said silicone rubber composition is an adhesive agent for a silicone rubber-coated cloth.

9. The silicone rubber composition according to any of Claims 1 to 6, wherein said silicone rubber composition is a sealer for a silicone rubber-coated cloth.

## Patentansprüche

1. Silikonkautschukzusammensetzung, die Folgendes umfasst:
100 Gewichtsteile eines Diorganopolysiloxans (A) mit durchschnittlich mindestens zwei Alkenylgruppen in einem Molekül;
5 bis 100 Gewichtsteile eines Quarzmehls (B) mit einer durchschnittlichen Teilchengröße im Bereich von 0,01 bis 3,0 µm;
ein Organopolysiloxan (C) mit durchschnittlich mindestens zwei siliciumgebundenen Wasserstoffatomen in einem Molekül, wobei das Molverhältnis von siliciumgebundenen Wasserstoffatomen, die in dieser Komponente enthalten sind, zu Alkenylgruppen von Komponente (A) im Bereich von 0,5 bis 5 liegt;
5 bis 100 Gewichtsteile eines Calciumcarbonatmehls (D) und
einen Hydrosilylierungskatalysator (E) in einer Menge, die dazu ausreicht, die Aushärtung der Silikonkautschukzusammensetzung zu beschleunigen.

2. Silikonkautschukzusammensetzung nach Anspruch 1, wobei es sich bei Komponente (D) um ein leichtes (gefälltes) Calciumcarbonatmehl handelt.

3. Silikonkautschukzusammensetzung nach Anspruch 1, wobei es sich bei Komponente (D) um ein leichtes (gefälltes) Calciumcarbonatmehl handelt, das mit einer Fettsäure oder einer Harzsäure oberflächenbehandelt ist.

4. Silikonkautschukzusammensetzung nach Anspruch 1, die weiterhin mit einem Siliciumdioxidpulver (F) versehen ist, das in einer Menge von 1 bis 100 Gewichtsteilen pro 100 Gewichtsteilen der Komponente (A) verwendet wird.

5. Silikonkautschukzusammensetzung nach Anspruch 4, wobei die Komponenten (A) und (F) unter Erhitzen vorher gemischt werden.

6. Silikonkautschukzusammensetzung nach den Ansprüchen 1 bis 5, die weiterhin mit einem Diorganopolysiloxan versehen ist, das an beiden Molekülenden mit Hydroxylgruppen verschlossen ist, eine Viskosität bei 25 °C im Bereich von 5 bis 200 mPa·s (G) aufweist und in einer Menge von 0,1 bis 10 Gewichtsteilen pro 100 Gewichtsteilen der Komponente (A) verwendet wird.

7. Silikonkautschukzusammensetzung nach einem der Ansprüche 1 bis 6, wobei es sich bei der Silikonkautschukzusammensetzung um ein Haftmittel für Silikonkautschuk handelt.

8. Silikonkautschukzusammensetzung nach einem der Ansprüche 1 bis 6, wobei es sich bei der Silikonkautschukzusammensetzung um ein Haftmittel für ein mit Silikonkautschuk beschichtetes Gewebe handelt.

9. Silikonkautschukzusammensetzung nach einem der Ansprüche 1 bis 6, wobei es sich bei der Silikonkautschukzusammensetzung um einen Versiegeler für ein mit Silikonkautschuk beschichtetes Gewebe handelt.

## Revendications

1. Composition de caoutchouc de silicone comprenant :
100 parties en masse d'un diorganopolysiloxane (A) ayant en moyenne au moins deux groupes alcényle dans une molécule ;
5 à 100 parties en masse d'une poudre de quartz (B) avec une taille moyenne de particule dans la gamme de 0,01 à 3,0 µm ;
un organopolysiloxane (C) ayant en moyenne au moins deux atomes d'hydrogène liés par silicium dans une molécule, le rapport molaire entre les atomes d'hydrogène liés par silicium contenus dans le présent composant et les groupes alcényle du composant (A) est dans la gamme de 0,5 à 5 ;
5 à 100 parties en masse d'une poudre de carbonate de calcium (D) ; et
un catalyseur d'hydrosilylation (E) en une quantité suffisante pour accélérer la vulcanisation de la composition de caoutchouc de silicone.

2. Composition de caoutchouc de silicone selon la revendications 1, dans laquelle le composant (D) est une poudre de carbonate de calcium légère (précipité).

3. Composition de caoutchouc de silicone selon la revendication 1, dans laquelle le composant (D) est une poudre de carbonate de calcium légère (précipité) qui est traitée en surface avec un acide gras ou un acide résinique.

4. Composition de caoutchouc de silicone selon la revendication 1, comportant en outre une poudre de silice (F) utilisée en une quantité de 1 à 100 parties en masse pour 100 parties en masse du composant (A).

5. Composition de caoutchouc de silicone selon la revendication 4, dans laquelle les composants (A) et (F) sont mélangés au préalable pendant le chauffage.

6. Composition de caoutchouc de silicone selon les revendications 1 à 5, comportant en outre un diorganopolysiloxane coiffé aux deux extrémités moléculaires par des groupes hydroxyle ayant une viscosité à 25 °C dans la gamme de 5 à 200 mPa·s (G) utilisé en une quantité de 0,1 à 10 parties en masse pour 100 parties en masse du composant (A).

7. Composition de caoutchouc de silicone selon l'une quelconque des revendications 1 à 6, dans laquelle ladite composition de caoutchouc de silicone est un agent additif pour caoutchouc de silicone.

8. Composition de caoutchouc de silicone selon l'une quelconque des revendications 1 à 6, dans laquelle ladite composition de caoutchouc de silicone est un agent adhésif pour un tissu revêtu de caoutchouc de silicone.

9. Composition de caoutchouc de silicone selon l'une quelconque des revendications 1 à 6, dans laquelle ladite composition de caoutchouc de silicone est un produit d'étanchéité pour un tissu revêtu de caoutchouc de silicone.
